# Europäisches Patentamt

## European Patent Office

## Office européen des brevets

(11) Veröffentlichungsnummer: **0 143 224**
**B1**

(12) # EUROPÄISCHE PATENTSCHRIFT

(45) Veröffentlichungstag der Patentschrift:
21.06.89

(51) Int. Cl.⁴: **H 04 B 9/00,** H 04 L 1/22

(21) Anmeldenummer: 84110781.6

(22) Anmeldetag: 10.09.84

(54) Verfahren zur Erkennung des Ausfalls eines oder mehrerer Übertragungskanäle in einem redundant ausgelegten optischen Übertragungssystem.

(30) Priorität: 28.09.83 DE 3335156

(43) Veröffentlichungstag der Anmeldung:
05.06.85 Patentblatt 85/23

(45) Bekanntmachung des Hinweises auf die Patenterteilung:
21.06.89 Patentblatt 89/25

(84) Benannte Vertragsstaaten:
DE FR GB

(56) Entgegenhaltungen:
DE-A-3 206 749

PATENT ABSTRACTS OF JAPAN, Band 6, Nr. 99 (E-111) 977 , 8. Juni 1982; & JP-A-57 30 427 (FUJITSU K.K.) 18-02-1982
PATENT ABSTRACTS OF JAPAN, Band 7, Nr. 226 (E-202) 1371 , 7. Oktober 1983; & JP-A-58 117 749 (HITACHI SEISAKUSHO K.K.) 13-07-1983

(73) Patentinhaber: Siemens Aktiengesellschaft Berlin und München, Wittelsbacherplatz 2, D-8000 München 2 (DE)

(72) Erfinder: Witte, Hans- Hermann Dipl.-Phys.Dr.rer.nat., Hippelstrasse 15, D-8000 München 82 (DE)

## Beschreibung

Ausfallerkennungsschaltkreis zur Erkennung des Ausfalls eines von zwei redundanten Übertragungskanälen.

Die Erfindung betrifft gemäß dem Oberbegriff des Patentanspruchs 1 einen Ausfallerkennungsschaltkreis zur Erkennung des Ausfalls eines von zwei redundanten Übertragungskanälen.

Ein Ausfallerkennungsschaltkreis zur Erkennung des Ausfalls eines von zwei Übertragungskanälen ist aus der JP-A-5 730 427 bekannt. Der bekannte Erkennungsschaltkreis besteht im wesentlichen aus einer bistabilen Kippstufe mit zwei Ausgängen und einem diesen Ausgängen nachgeschalteten Selektorschalter, wobei ein Eingang der bistabilen Kippstufe mit den aus einem Übertragungskanal und der andere mit den aus dem anderen Übertragungskanal anfallenden Daten in Form elektrischer Signale zu beaufschlagen ist.

Aufgabe der Erfindung ist es, einen ohne das Erfordernis einer bistabilen Kippstufe mit monostabilen Multivibratoren aufgebauten und mit wenigen logischen Verknüpfungsgliedern auskommenden Ausfallerkennungsschaltkreis der eingangs genannten Art anzugeben, der nicht nur den Ausfall eines redundanten Übertragungskanals erkennt, sondern auch anzeigt, welcher Kanal ausgefallen ist.

Diese Aufgabe wird durch die im kennzeichnenden Teil des Patentanspruchs 1 angegebenen Merkmale gelöst.

Die für den erfindungsgemäßen Schaltkreis vorgebbare Laufzeitdifferenz für die in den redundanten Übertragungskanälen übertragenen Daten ist vorteilhafterweise gemäß Anspruch 2 gewählt.

Die Erfindung wird beispielhaft anhand der Figuren in der folgenden Beschreibung näher erläutert. Von den Figuren zeigen:

Figur 1    ein Schema eines einfach redundanten optischen Übertragungssystems für drei Teilnehmer,

Figur 2    ein Blockschaltbild eines Ausfallerkennungsschaltkreises und

Figur 3a bis c    jeweils elf untereinander ange-ordnete Impuls diagramme über der Zeit t, welche untereinander die verschiedenen Ausgangssignale aus den verschiedenen Schaltungsgliedern des Schaltkreises nach Figur 1 zeigen, wobei Figur 3a den Fall zeigt, bei dem keiner der beiden redundanten Übertragungskanäle ausgefallen ist und die Figur 3b und 3c jeweils einen Fall zeigt, bei dem einer der beiden Kanäle ausgefallen ist.

Das als einfaches Beispiel herangezogene einfach redundante Übertragungssystem weist die drei Teilnehmer $T_I$, $T_{II}$ und $T_{III}$ auf, von denen jeder einen Sender $S_I$, $S_{II}$ bzw. $S_{III}$ und einen Empfänger $E_I$, $E_{II}$ bzw. $E_{III}$ aufweist. Jeder Sender sendet seine Information über zwei Übertragungswege aus und jede Information gelangt auf zwei solchen redundanten Übertragungswegen zu jedem Empfänger, wobei auf den Übertragungswegen die Leistung auch noch reduziert werden kann, beispielsweise durch Passieren eines Sternkopplers SK1, SK2.

Es möge beispielsweise der Sender $S_I$ des Teilnehmers $T_I$ über die Übertragungswege $I_1$ und $I_2$ Daten zum Empfänger $E_{III}$ senden. Wenn beide Übertragungswege $I_1$ und $I_2$, die beide beispielsweise aus Fasern bestehen, im Empfänger $E_{III}$ auf einen gemeinsamen Detektor geführt werden, müssen die Laufzeitdifferenzen beider Datenströme, beispielsweise durch Einfügen entsprechender, zusätzlicher Fasern in den kürzeren von beiden Übertragungswegen ausgeglichen werden. Das bedeutet sehr kritische Anforderungen an die Synchronisation. Über zwei Schwellwertkomparatoren könnte ein Ausfall eines Kanals festgestellt werden, wobei die Schwelle des einen Komparators anspricht, wenn nur ein Bitstrom vorhanden ist, beide Komparatoren aber ansprechen, wenn sich beide Bitströme phasenrichtig überlagern. Man könnte auch die beiden Bitströme über je einen Detektor mit anschließendem Empfängerteil auffangen und eine entsprechende, elektrische Verzögerung für einen bitweisen Vergleich vornehmen. Dieses Verfahren ist jedoch auch sehr kritisch und störanfällig.

Diese Probleme werden beseitigt, wenn die anfallenden Daten einer Ausfallerkennungseinrichtung zugeführt werden, die den Ausfall eines Übertragungskanals aus den angefallenden Daten unabhängig von deren statistischen Phasenlagen relativ zueinander feststellt.

Dabei kann so vorgegangen werden, daß man die zu verschiedenen Zeiten am Ausgang beider Empfänger anfallenden Daten jeweils in einen Speicher bringt. Wartet man eine so große Zeit ab, daß genügend viele Bits in beiden Speichern eingelaufen sind, so kann man durch den Vergleich einander entsprechender Bits in beiden Speichern feststellen, ob ein Kanal defekt ist oder nicht. Um auszuschließen, daß Übertragungsfehler einen Kanalausfall vortäuschen, muß die sehr geringe Häufigkeit, daß entsprechende Bits bei Übertragungsfehlern nicht übereinstimmen, als Kriterium herangezogen werden. Mit diesem Verfahren kann man allerdings nicht feststellen, welcher Übertragungskanal defekt ist.

Dazu ist ein Verfahren geeignet, bei dem die anfallenden Daten in Form elektrischer Signale einem logischen Ausfallerkennungsschaltkreis zugeführt werden, der gegenüber Laufzeitunterschieden in den redundanten Kanälen unkritisch ist und der ein Signal erzeugt, wenn ein Übertragungskanal ausgefallen ist. Auch bei diesem Verfahren werden keine kritischen Verzögerungen benötigt. Die Länge des Datenstromes und die Phasenlage beider Bitströme sind beliebig und der logische Ausfallerkennungsschaltkreis läßt in einfacher und unkritischer Weise erkennen, ob ein Übertragungskanal abgefallen und er läßt sogar erkennen, welcher Übertragungskanal unterbrochen ist.

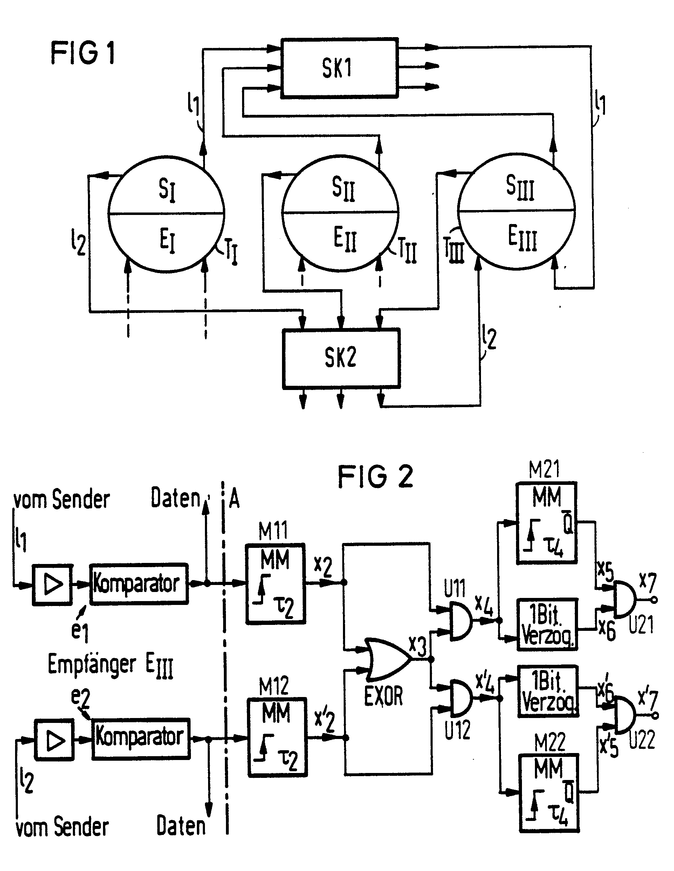

Dieser logische Ausfallerkennungsschaltkreis ist in der Figur 2 dargestellt. Links von der gestrichelten senkrechten Linie A befinden sich die den beiden Übertragungskanälen $l_1$ und $l_2$ zugeordneten beiden Empfängerkreise e1 und e2 des betreffenden Empfängers, beispielsweise des Empfängers $E_{III}$. An den Ausgängen dieser Empfängerkreise e1 und e2 werden die anfallenden oder zurückgewonnenen Daten entnommen.

Rechts von der Linie A ist der Ausfallerkennungsschaltkreis dargestellt.

Dieser Schaltkreis weist zwei erste monostabile Multivibratoren M11 und M12 mit einer Zeitkonstanten $\tau_2$ auf. Dem ersten Multivibrator M11 wird der Datenstrom aus dem Empfängerkreis e1 und dem anderen ersten Multivibrator M12 der Datenstrom aus dem Empfängerkreis e2 in Form elektrischer Signale zugeführt. Jeder der beiden ersten Multivibratoren ist durch eine Vorderflanke in den zugeführten Signalen auslösbar. Die relative Phasenlage der beiden Ausgangssignale $x_2$ und $x'_2$ der beiden ersten Multivibratoren M11 und M12 entspricht genau der relativen Phasenlage der zugeführten Signale zueinander.

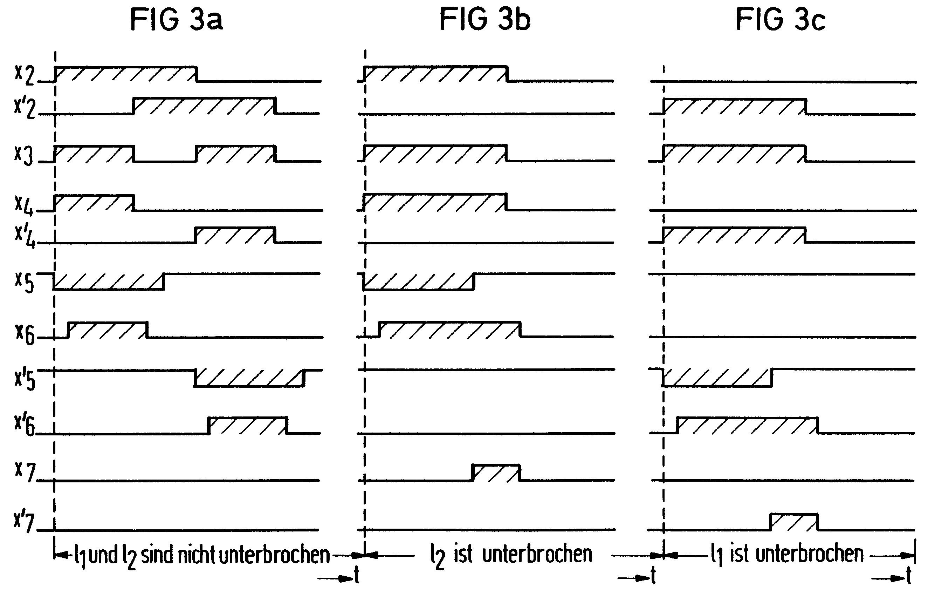

Die beiden Ausgangssignale $x_2$ und $x'_2$, deren jeweilige Form den beiden obersten Diagrammen der Figuren 3a bis 3c zu entnehmen ist, werden durch ein exklusives ODER-Glied EXOR miteinander verknüpft. Das Ausgangssignal $x_3$ dieses exklusiven ODER-Gliedes ist jeweils im dritten Diagrammen von oben der Figuren 3a bis 3c dargestellt und wird einerseits mit dem Ausgangssignal $x_2$ durch ein erstes UND-Glied U11 und andererseits mit dem Ausgangssignal $x'_2$ durch ein anderes erstes UND-Glied U12 logisch verknpüft. Das Ausgangssignal $x_4$ und $x'_4$ eines jeden ersten UND-Gliedes U11 und U12 ist jeweils im vierten bzw. fünften Diagramm von oben der Figuren 3a bis 3c dargestellt und wird jeweils einem zweiten vorderflankengesteuerten monostabilen Multivibrator M21 bzw. M22 zugeführt, der eine zweite Zeitkonstante $\tau_4$ aufweist.

Die invertierten Ausgangssignale $x_5$ und $x'_5$ der beiden zweiten Multivibratoren M21 und M22 sind jeweils im sechsten bzw. achten Diagramm von oben der Figuren 3a bis 3c dargestellt. Das invertierte Ausgangssignal $x_5$ bzw. $x'_5$ eines jeden zweiten Multivibrators M21 bzw. M22 und das durch ein Verzögerungsglied um ein Bit verzögerte Ausgangssignal $x_6$ bzw. $x'_6$ des zugeordneten ersten UND-Gliedes U11 bzw. U12 werden durch jeweils ein zweites UND-Glied U21 bzw. U22 verknüpft, deren Ausgangssignale mit $x_7$ bzw. $x'_7$ bezeichnet sind.

Die Signale $x_6$, $x'_6$, $x_7$ und $X'_7$ sind dieser Reihenfolge entsprechend jeweils im siebten und neunten bis zehnten Diagramm von oben der Figuren 3a bis 3c dargestellt.

Die Figur 3a zeigt die vorstehend genannten einzelnen Signale für den Fall, daß keiner der Übertragungswege l1 und l2 ausgefallen ist. Die Figur 3b zeigt die genannten Signale für den Fall, daß der Übertragungsweg l1 unterbrochen ist, während die Figur 3c diese Signale für den Fall zeigt, daß der Übertragungsweg l2 unterbrochen ist.

Aus der Figur 3a ist zu entnehmen, daß die Ausgangssignale $x_7$ und $x'_7$ beide 0 sind, wenn die beiden Übertragungswege l1 und l2 nicht unterbrochen sind. Dies gilt sowohl für den Fall, daß an den Eingängen der ersten Multivibratoren M11 und M12 Datensignale anliegen, als auch für den Fall, daß keine Datensignale anliegen, der durch eine Dauernullfolge gekennzeichnet ist.

Gemäß Figur 3b und Figur 3c ist das Ausgangssignal $x'_7$ bzw. $x_7$ ein "1"-Impuls, wenn der Übertragungskanal l1 bzw. l2 unterbrochen ist. Damit zeigt der Ausfallerkennungsschaltkreis nach Figur 2 nicht nur an, daß ein Übertragungskanal unterbrochen ist, sondern er zeigt auch an, welcher Kanal ausgefallen ist.

In den Impulsdiagrammen der Figuren 3a bis 3c sind die Verzögerungszeiten durch die einzelnen Glieder nicht berücksichtigt.

Die Laufzeitdifferenz zwischen dem Übertragungskanal l2 und l1 ist gegeben durch

$$t_2 - t_1 = (w_2 - w_1)\, n/c,$$

wobei n den Brechungsindex der Faser $l_1$, $l_2$, c die Vakuumlichtgeschwindigkeit und $w_1$ bzw. $w_2$ die Länge des betreffenden Übertragungsweges $l_1$ bzw. $l_2$ bedeuten.

Die Zeitkonstante $\tau_4$ der zweiten Multivibratoren M21 und M22 wird größer als $t_2 - t_1$ gewählt, während die Zeitkonstante $\tau_2$ der ersten Multivibratoren M11 und M12 größer als $\tau_4$ gewählt ist.

Wird konkret angenommen, daß $w_2$ größer als $w_1$ ist, dann ergibt sich die maximale Laufzeitdifferenz $(\Delta t)_{max}$ zu

$$(\Delta t)_{max} = (t_2)_{max} = n \cdot (w_2)_{max}/c,$$

wobei $(w_2)_{max}$ die größte Entfernung zwischen irgendeinem Sender und Empfänger im System bedeutet.

Der Schaltkreis nach Figur 2 arbeitet unabhängig von der Wegdifferenz zwischen $w_2$ und $w_1$ und unabhängig von der Länge des Datenstroms, wenn folgende Bedingung eingehalten wird:

$$n \cdot (w_2)_{max}/c < \tau_4 < \tau_2.$$

Der Zeitunterschied zwischen $n \cdot (w_2)_{max}/c$ und $\tau_4$ bzw. $\tau_4$ und $\tau_2$ sollte aus technischen Gründen die Dauer eines Bits nicht unterschreiten.

Die beiden zweiten Multivibratoren M21 bzw.

M22 können voneinander verschiedene Zeitkonstansten $\tau_4$ aufweisen. Jede dieser Zeitkonstanten muß dann die letztgenannte Bedingung erfüllen.

## Patentansprüche

1. Ausfallerkennungsschaltkreis zur Erkennung des Ausfalls eines von zwei redundanten Übertragungskanälen (11, 12), dadurch gekennzeichnet, daß zwei erste monostabile Multivibratoren (M11, M12) mit einer vorgegebenen ersten Zeitkonstanten ($\tau_2$) vorgesehen sind, von denen einer (M11) mit den aus einem Übertragungkanal (11) und der andere mit den aus dem anderen Übertragungkanal (12) anfallenden Daten in Form elektrischer Signale zu beaufschlagen ist, wobei diese ersten Multivibratoren (M11, M12) durch die gleiche Phase dieser elektrischen Signale auslösbar sind, so daß die relative Phasenlage der Ausgangssignale ($x_2$, $x'_2$) der ersten Multivibratoren (M11, M12) der relativen Phasenlage der anfallenden Daten entspricht,

daß die beiden Ausgangssignale ($x_2$, $x'_2$) der beiden ersten Multivibratoren (M11, M12) durch ein exklusives ODER-Glied (EXOR) miteinander verknüpfbar sind, daß das Ausgangssignal ($x_3$) des exklusiven ODER-Gliedes (EXOR) einerseits mit dem Ausgangssignal ($x_2$) eines ersten Multivibrators (M11) und andererseits mit dem Ausgangssignal ($x'_2$) des anderen ersten Multivibrators (M12) durch jeweils ein erstes UND-Glied (U11, U12) verknüpfbar ist,

daß durch das Ausgangssignal ($x_4$, $x'_4$) eines jeden ersten UND-Gliedes (U11, U12) jeweils ein zugeordneter zweiter monostabiler Multivibrator (M21, M22) mit einer zweiten Zeitkonstanten ($\tau_4$) auslösbar ist,

daß das invertierte Ausgangssignal ($x_5$, $x'_5$) eines jeden zweiten monostabilen Multivibrators (M21, M22) und das um ein Bit verzögerte Ausgangssignal ($x_6$ $x'_6$) des zugeordneten ersten UND-Gliedes (U11, U12) durch jeweils ein zugeordnetes zweites UND-Glied (U21, U22) verknüpfbar sind, wobei die zweite Zeitkonstante ($\tau_4$) mindestens um die zeitliche Länge eines Bits größer als eine vorgegebene Laufzeitdifferenz für die in den redundanten Übertragungskanälen (11, 12) übertragenen Daten und die erste Zeitkonstante ($\tau_2$) mindestens um die zeitliche Länge eines Bits größer als die zweite Zeitkonstante ($\tau_4$) gewählt ist,

wodurch ein Ausgangssignal ($x_7$) eines zweiten UND-Gliedes (U21) einen Ausfall eines Übertragungskanals (11) und ein Ausgangssignal ($x'_7$) des anderen zweiten UND-Gliedes (U22) einen Ausfall des anderen Übertragungskanals (12) anzeigt.

2. Schaltkreis nach Anspruch 1, dadurch gekennzeichnet, daß die Laufzeitdifferenz mindestens gleich der Laufzeit der Daten in einer längsten Übertragungsstrecke des Übertragungssystems gewählt ist.

## Claims

1. Failure recognition circuit for recognizing the failure of one of two redundant transmission channels (11, 12), characterized in that two first monostable multivibrators (M11, M12) are provided with a predetermined first time constant ($\tau_2$), one of which (M11) is to receive the data, in the form of electrical signals, arriving from a transmission channel (11) and the other of which is to receive the data arriving from the other transmission channel (12), these first multivibrators (M11, M12) being triggerable by the same phase of these electrical signals so that the relative phase position of the output signals ($x_2$, $x'_2$) of the first multivibrators (M11, M12) corresponds to the relative phase position of the arriving data, in that the two output signals ($x_2$ $x'_2$) of the two first multivibrators (M11, M12) can be combined with one another by an exclusive OR element (EXOR), in that the output signal ($x_3$) of the exclusive OR element (EXOR) can be combined on the one hand with the output signal ($x_2$) of a first multivibrator (M11), and on the other hand with the output signal ($x'_2$) of the other first multivibrator (M12) by a first AND element (U11, U12) in each case, in that in each case an associated second monostable multivibrator (M21, M22) can be triggered with a second time constant ($\tau_4$) by the output signal ($x_4$, $x'_4$) of each first AND element (U11, U12), in that the inverted output signal ($x_5$, $x'_5$) of each second monostable multivibrator (M21, M22) and the output signal ($x_6$, $x'_6$), delayed by one bit, of the associated first AND element (U11, U12) can be combined in each case by an associated second AND element (U21, U22), the second time constant ($\tau_4$) being selected to be greater than a predetermined transit time difference for the data transmitted in the redundant transmission channels (11, 12) at least by the temporal length of a bit, and the first time constant ($\tau_2$) being selected to be greater than the second time constant ($\tau_4$) at least by the temporal length of a bit, as a result of which an output signal ($x_7$) of a second AND element (U21) indicates a failure of a transmission channel (11) and an output signal ($x'_7$) of the other second AND element (U22) indicates a failure of the other transmission channel (12).

2. Circuit according to Claim 1, characterized in that the transit time difference is selected to be at least equal to the transit time of the data in a longest transmission section of the transmission system.

## Revendications

1. Circuit d'identification de défaillances, servant à identifier la défaillance d'un de deux canaux redondants de transmission (11, 12), caractérisé par le fait qu'il est prévu deux premiers multivibrateurs mono-stables (M11, M12), qui possèdent une première constante de

temps prédéterminée ($\tau_2$) et dont l'un (M11) doit être chargé par les données sous forme de signaux électriques provenant d'un canal de transmission (11) et dont l'autre doit être chargé par des données sous forme de signaux électriques provenant de l'autre canal de transmission (12), ces premiers multivibrateurs (M11, M12) pouvant être déclenchés par la même phase de ces signaux électriques, de sorte que la position de phase relative des signaux de sortie ($x_2$, $x'_2$) des premiers multivibrateurs (M11, M12) correspond à la position de phase relative des données arrivantes,

que les deux signaux de sortie ($x_2$, $x'_2$) des deux premiers multivibrateurs (M11, M12) peuvent être combinés au moyen d'un circuit OU-Exclusif (EXOR) et que le signal de sortie ($x_3$) du circuit OU-Exclusif (EXOR) peut être combiné d'une part au signal de sortie ($x_2$) d'un premier multivibrateur (M11) et d'autre part au signal de sortie ($x'_2$) de l'autre premier multivibrateur (M12) au moyen de premiers circuits respectifs ET (U11, U12),

que respectivement un second multivibrateur monostable associé (M21, M22) possédant une seconde constante temps ($\tau_4$) peut être déclenché par le signal de sortie ($x_4$, $x'_4$) de chaque premier circuit ET (U11, U12),

que le signal de sortie inversé ($x_5$, $x'_5$) de chaque second multivibrateur monostable (M21, M22) et le signal de sortie ($x_6$, $x'_6$), retardé d'un bit, du premier circuit ET associé (U11, U12) peuvent être combiné par l'intermédiaire d'un second circuit associé ET (U21, U22), la seconde constante de temps ($\tau_4$) étant choisie supérieure, d'au moins la durée d'un bit, à une différence prédéterminée du temps de propagation pour les données transmises dans les canaux redondants de transmission (11, 12), et la première constante de temps ($\tau_2$) étant choisie supérieure, d'au moins la durée d'un bit, à la seconde constante de temps ($\tau_4$),

ce qui a pour effet qu'un signal de sortie ($x_7$) d'un second circuit ET (21) indique une défaillance d'un canal de transmission (11) et qu'un signal de sortie ($x'_7$) de l'autre second circuit ET (22) indique une défaillance de l'autre canal de transmission (12).

2. Circuit suivant la revendication 1, caractérisé par le fait que la différence de temps de propagation est choisie au moins égale au temps de propagation des données dans la section de transmission, la plus longue, du système de transmission.

# FIG 1

# FIG 2

FIG 3a

FIG 3b

FIG 3c

x2

x'2

x3

x4

x'4

x5

x6

x'5

x'6

x7

x'7

l₁ und l₂ sind nicht unterbrochen → t

l₂ ist unterbrochen → t

l₁ ist unterbrochen → t

EP 0 143 224 B1